Europäisches Patentamt

European Patent Office

Office européen des brevets

(19)

(11) Veröffentlichungsnummer: **0 383 027**

**A1**

(12) ## EUROPÄISCHE PATENTANMELDUNG

(21) Anmeldenummer: 90100783.1

(22) Anmeldetag: 16.01.90

(51) Int. Cl.⁵: **F16C 23/08, F16C 33/36**

(30) Priorität: **15.02.89 DE 3904456**

(43) Veröffentlichungstag der Anmeldung:
**22.08.90 Patentblatt 90/34**

(84) Benannte Vertragsstaaten:
**AT BE CH DE ES FR GB IT LI NL SE**

(71) Anmelder: **JACOB, Werner**
**Briandring 29**
**D-6000 Frankfurt 70(DE)**

(72) Erfinder: **JACOB, Werner**
**Briandring 29**
**D-6000 Frankfurt 70(DE)**

(74) Vertreter: **Harwardt, Günther, Dipl.-Ing. et al**
**HARWARDT NEUMANN PATENTANWÄLTE**
**Scheerengasse 2 Postfach 1455**
**D-5200 Siegburg 2(DE)**

(54) **Gelenklager.**

(57) Die Erfindung betrifft ein Gelenklager 1 bei dem der Wälzkörper 5 so ausgebildet ist, daß sich im Verhältnis zu dem einen Kreisbogen darstellende Innenringlaufbahn 7 und Außenringlaufbahn 8 vier Kontaktstellen 15-18 ergeben. Hierzu sind dem Wälzkörper 5 ein mittlerer Zylinderabschnitt 11 und daran anschließend beidseitig Tragabschnitte 12 zugeordnet, deren Außenkontur 13 einen Radius aufweist, der mit Schmiegung bezüglich der Innenringlaufbahn 7 und Außenringlaufbahn 8 ausgebildet ist. Diese Ausbildung ermöglicht relativ kleine und kompakte Gelenklager, die sowohl eine Winkelbewegung als auch eine Drehbewegung bei reduzierter Reibung erlauben. Die Vierpunktanlage ergibt außerdem eine genaue Führung der Wälzkörper 5 und macht Borde überflüssig. Ferner wird eine kompaktere Bauweise erreicht. Infolge Herstellung der Außenkontor durch Schleifen mit Profilformscheiben und Anbringung des mittleren Zylinderabschnittes wird auch für die Praxis eine Meßbarkeit zur Klassifizierung der jeweiligen Wälzkörper 5 zu den richtigen Außenring und Innenringkombinationen zur Erzielung der gewünschten Spielverhältnisse erreicht.

Fig. 1

EP 0 383 027 A1

# Gelenklager

Die Erfindung betrifft ein Gelenklager, bei dem Innenring und Außenring einander gegenüber abwinkelbar sind und gegebenenfalls zusätzlich von einem Käfig geführte Wälzkörper an der Innenringlaufbahn und dar Außenringlaufbahn auf einer Kreisbahn abwälzend angeordnet sind, wobei Innenringlaufbahn und Außenringlaufbahn im Querschnitt jeweils als Kreisbogen ausgebildet sind und der Mittelpunkt der Außenringlaufbahn auf der Lagerdrehachse angeordnet ist.

Es sind Gelenklager bekannt, bei denen die Wälzkörper als Tonnen ausgebildet sind. Ihre Mantellinie schmiegt sich dem Laufbahnprofil von Außen- und Innenring an, wobei der Schmiegungsmittelpunkt der Rollen genau im Mittelpunkt des Laufbahnprofils liegt. Schon geringe Axialschübe bringen die beiden Mittelpunkte in den Versatz, der immer in dem Selbsthemmungsbereich liegt. Die Rollen versuchen abzukippen und müssen deshalb sehr gut achsparallel geführt sein.

Um dem entgegenzuwirken, werden diese Tonnenrollen am Innenring zwischen festen Borden geführt und durch einen Käfig auf Abstand gehalten. Ein weiterer Nachteil ist, daß nur Tonnen mit einem Durchmesser - Längenverhältnis < 1:1,5 zum Einsatz kommen können um eine ausreichende achsparallele Führung an den Borden zu gewährleisten. Auch ist es erforderlich, daß die Tonnenrollenmitte im genauen Abstand zu den Borden liegen muß, sonst wird die Tonnenrollenmitte aus aus ihrer Laufbahnmitte verschoben, was zur Folge hat, daß nicht nur eine Drehzahlverminderung eintritt (einseitige Anlage), sondern sich auch eine Reibungserhöhung bewirkt wird.

Diese Forderungen machen solche Tonnenrollenlager unwirtschaftlich, auch ihr Anwendungseinsatz ist sehr kritisch.

Ausgehend hiervon liegt der Erfindung die Aufgabe zugrunde, ein Gelenklager vorzuschlagen, das relativ kleinbauend ausgebildet und preisgünstig herzustellen ist und darüberhinaus trotz vergröberter Toleranzen ein Verklemmen der Wälzkörper verhindert.

Diese Aufgabe wird erfindungsgemäß dadurch gelöst, daß die Wälzkörper einen mittleren Zylinderabschnitt und beidseitig daran anschließend bezüglich der Wälzkörperachse rotationssymmetrische Tragabschnitte aufweisen, die an der Außenringlaufbahn und an der Innenringlaufbahn vier Kontaktstellen bildend abgestützt sind, und daß die Kontaktstellen bezogen auf die die Mittelpunkte von Innenringlaufbahn und Außenringlaufbahn enthaltende Mittelebene mit einem Winkel versetzt angeordnet sind, der größer als der Selbsthemmungswinkel ist.

Durch diese Ausbildung wird eine definierte Anlage zwischen den Wälzkörpern und dem zugehörigen Innenring und Außenring an vier Punkten erreicht. Diese vier Kontaktstellen sollen außerhalb des Selbsthemmungsbereiches liegen, wodurch ein Verklemmen der Wälzkörper ausge schlossen wird. Darüberhinaus wird durch den Zylinderabschnitt erreicht, daß im mittleren Bereich in keinem Fall eine Anlage eintreten kann. Durch die Vierpunktanlage erübrigt sich auch eine Führung der Wälzkörper an Borden beispielsweise des Innenringes, so daß auch eine genaue Bearbeitung der Endflächen der Wälzkörper entbehrlich wird und schließlich die Borde entfallen können. Die Vierpunktauflage erzeugt eine genaue Führung der Wälzkörper während des Abwälzvorganges, welche darüberhinaus noch durch einen Käfig unterstützt werden kann, aber nicht erforderlich ist. Darüberhinaus lassen sich Lagerverhältnisse erreichen, bei denen Verhältnisse von Durchmesser zu Länge mit Werten größer als 1:2 erreichbar sind. Je größer das Lagerverhältnis ist, desto günstiger werden bei einem Gelenklager nach der Erfindung die Führungsverhältnisse, da die Führungslänge zunimmt. Da aufgrund moderner Fertigungsverfahren die Außenkontur der Wälzkörper über die gesamte Länge gleichzeitig hergestellt werden kann, wird auch in einfacher Weise eine Kontrolle der Größe der einzelnen Wälzkörper erreicht. Das ist dadurch vereinfacht, daß der Mittelabschnitt zylindrisch ausgebildet ist. Ein Nachmessen und Klassifizieren von Tonnenrollen gestaltet sich dagegen schwierig. Ein Messen der für die Zuordnung wichtigen Wälzkörperdurchmesser im Bereich der Kontaktstellen wäre praktisch nicht durchführbar. Es ist eine vollrollige Gestaltung, wobei auf einen Käfig verzichtet wird, oder eine solche mit einem mit einer geringen Anzahl von Wälzkörpern gefüllten Käfig möglich. In weiterer Ausgestaltung ist vorgesehen, daß die Tragabschnitte eine einen Kreisbogen entsprechende Außenkontur aufweisen, wobei der Radius kleiner ist als der von Außenringlaufbahn oder Innenringlaufbahn, und daß der Mittelpunkt auf einem gedachten Strahl ausgehend vom Mittelpunkt der Außenringlaufbahn und geneigt um den Neigungswinkel der Kontaktstellen zur Mittelebene angeordnet ist.

Durch diese Ausbildung wird aufgrund der Schmiegung gewährleistet, daß die Kontaktstellen jeweils außerhalb des Selbsthemmungsbereiches angeordnet sind. Bei den üblichen Materialpaarungen liegt der Selbsthemmungswinkel in der Größenordnung bis etwa 7°. Bevorzugt ist die Lage der Kontaktstellen also so zu wählen, daß sie bezogen auf die Mittelebene mit einem Winkel angeordnet sind, der größer als der vorgenannte Winkel ist.

Zur Sicherheit sollte, wie nach der Erfindung vorgeschlagen wird, der Winkel um den die Kontaktstellen zur Mittelebene versetzt sind, jeweils mindestens um den maximalen Kippwinkel größer gewählt werden als der Selbsthemmungswinkel.

Hierdurch wird ausgeschlossen, daß auch bei gekippter Stellung des Lagers, also bei Abwinklung des Innenringes gegenüber dem Außenring eine Annäherung einzelner Wälzkörper an den Selbsthemmungsbereich eintre-Len könnte.

Für den Fall beispielsweise, daß ausgehend von der Normallage, bei der die Achsen von Innenring und Außenring in übereinstimmender Lage sind, die Abwinklung zu einer Seite hin 2° beträgt, beträgt nach der Lehre der Erfindung der Winkel des Versatzes der Kontaktstellen mindestens 9° (7° + 2°).

Besonders günstige Tragverhältnisse ergeben sich, wenn der Radius der Außenkontur Tragabschnitte der Wälzkörper zum Radius der Außenringlaufbahn oder Innenringlaufbahn mit einer Schmiegungsgröße nach der Beziehung

$$S = \frac{R_L}{2 \times R_W}$$

ausgelegt ist, worin S den Wert zwischen 0,51 und 0,75 annimmt.

Es wird ferner vorgeschlagen, daß der Winkel um den die Kontaktstellen zur Mittelebene geneigt versetzt angeordnet sind, mindestens 7°, vermehrt um den maximalen Kippwinkel ausgehend von der Mittellage, beträgt.

Nach einem weiteren wesentlichen Merkmal wird vorgeschlagen, daß die Außenkontur der Wälzkörper unter Einschluß des mittleren Abschnittes unter Verwendung von Profilformscheiben auf Endmaß geschliffen ist. Die Profilscheiben enthalten die endgültige Kontur. Aufgrund des zylindrischen Abschnittes werden auch die Durchmesser, die im Bereich der Kontaktstellen gegeben sind, meßbar. Es läßt sich somit eine Klassifizierung der einzelnen Wälzkörper und Zuordnung zu dem richtigen Innenund Außenring vornehmen.

Insgesamt wird durch die Ausbildung mit vier Kontaktstellen erreicht, daß der Durchmesser der einzelnen Wälzkörper verringert werden kann, da die Endflächen nicht mehr zur Führung der Wälzkörper an Borden des Innenringes ausgebildet zu sein brauchen. Die Endflächen können kleiner ausgebildet sein und entsprechend ggfs. sogar unbearbeitet gelassen werden. Die Reduzierung der Durchmesser der einzelnen Wälzkörper gegenüber den bekannten Tonnenlagern führt auch zu einer kompakteren Ausführung und damit auch zu einer Vergrößerung des Einsatzbereiches. Es können nun auch Gelenklager mit Wälzkörpern in Bereichen, die bisher nur solchen mit Gleitlagerung vorbehalten waren, eingesetzt werden. Gleichzeitig wird der Nachteil der gleitgelagerten Gelenklager hinsichtlich der hohen Reibung bei Drehung der miteinander zu verbindenden Teile behoben. Es kann also der Anwendungsbereich erweitert werden.

Bevorzugte Ausführungsbeispiele der Erfindung sind in der Zeichnung schematisch dargestellt.

Es zeigt

Figur 1 das Gelenklager im Längsschnitt mit der Lagerdrehachse X-X in gestreckter Lage als Halbschnitt

Figur 2 das Gelenklager gem. Figur 1 in abgekippter Stellung des Innenringes

Figur 3 die Einzelheiten bezüglich der Auslegung und gegenseitigen Ausbildung von Innenringlaufbahn, Außenringlaufbahn und Wälzkörper im vergrößerten Maßstab, und

Figur 4 einen Längsschnitt einer Ausführung als Gelenkkopf mit einer alternativen Ausbildung des Außenringes.

Das in den Figuren dargestellte Gelenklager 1 umfaßt den Innenring 2, einen konzentrisch dazu angeordneten Außenring 3 und zwischen beiden abwälzend angeordnete Wälzkörper 5. Die Wälzkörper 5 sind auf einer Kreisbahn mit dem Rollkreis 20 um die Drehachse X-X abwälzend angeordnet. Sie stützen sich hierzu in der Innenringlaufbahn 7 und in der Außenringlaufbahn 8 ab. Die Wälzkörper 5 sind umfangsverteilt angeordnet und durch einen Käfig 6 gehalten.

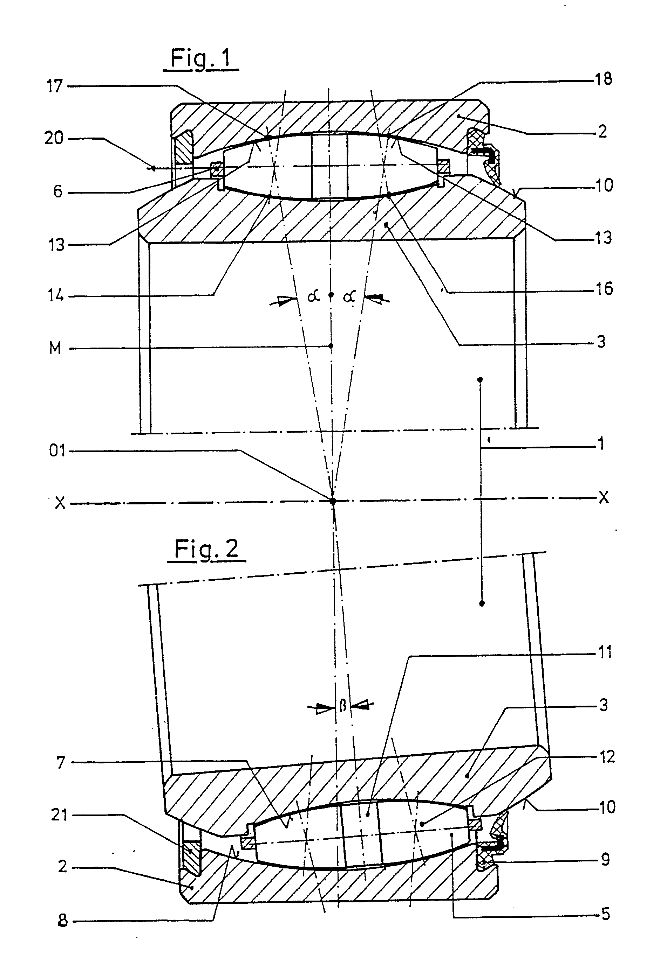

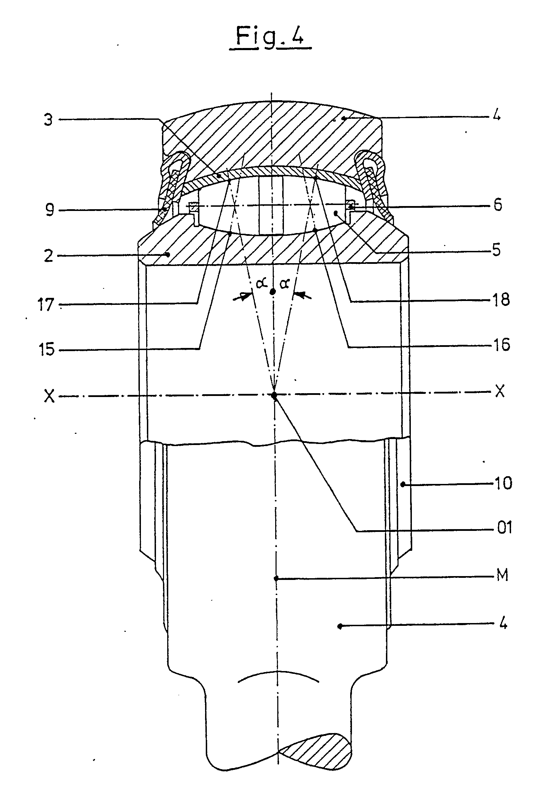

Es ist erkennbar, daß die Wälzkörper 5 einen mittleren zylindrischen Abschnitt 11 und seitlich daran anschließende Tragabschnitte 12 aufweisen. Die beiden Tragabschnitte 12 sind so gestaltet, daß sich gegenüber der Innenringlaufbahn 7 und der Außenringlaufbahn 8 unter Belastung zusammen vier Kontaktstellen 15,16,17,18 ergeben. Die Kontaktstellen 15-18 sind so angeordnet, daß sie außerhalb des Selbsthemmungsbereiches für eine Berührung der Wälzkörper mit der Innenringlaufbahn 7 und der Außenringlaufbahn 8 sorgen. Hierzu sind die Kontaktstellen 15-18 bezüglich der Mittelebene M, die sich bei gestreckter, d.h. ausgerichteter Position (wie in Figur 1 und 4 dargestellt) von Innenring 2 und Außenring 3 als Mittelebene ergibt, mit einem Neigungswinkel α angeordnet, der größer ist als der Selbsthemmungswinkel. Darüberhinaus ist α so bemessen, daß auch über den gesamten Abwinklungsbereich von Innenring 2 und Außenring 3 einander gegenüber ein Erreichen des Selbsthemmungsbereiches auch einzelner Wälzkörper ausgeschlossen ist.

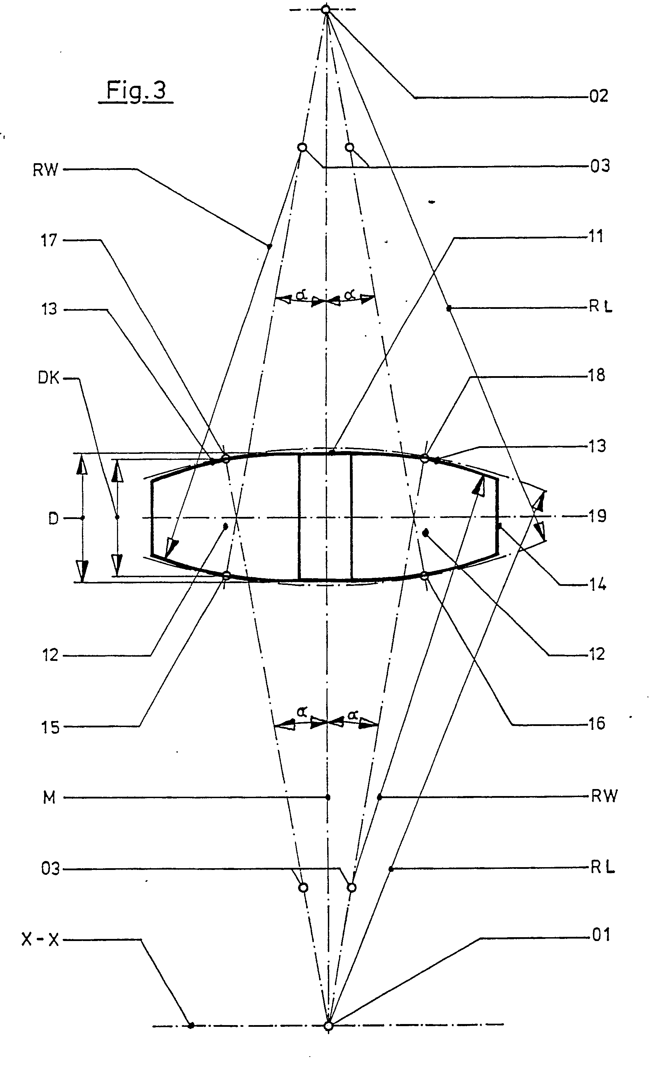

Die Ausbildung der Innenringlaufbahn 7, der Außenringlaufbahn 8 sowie der Außenkontur der Wälzkörper 5 sind im Zusammenhang mit Figur 3 noch näher erläutert.

Aus Figur 1,2 (rechte Hälfte) und 4 ist ebenfalls erkennbar, daß eine Dichtung 9 zur Abdichtung des Freiraumes zwischen Außenring 3 und Innenring 2 vorgesehen ist. Diese Dichtung 9 liegt mit einer Dichtlippe auf einer Dichtungsanlagefläche 10 des Innenringes 2 an, welche als Radius um den Mittelpunkt 01 ausgebildet ist. Für den Fall, daß eine Auslieferung ohne Dichtung erfolgt, wird das Gelenklager mit einer Verliersicherung 21 versehen, welche die Abwinklung von Innenring 2 und Außenring 3 begrenzt.

Bei der Ausführungsform nach Figur 4 ist bei ansonsten im wesentlichen gleichen Teilen eine andere Gestaltung des Außenringes 3 vorgesehen. Der Außenring 3 ist als Blechformteil gestaltet, welches in einem Außenringträger oder Gelenkkopf 4 aufgenommen ist. Hierdurch wird erreicht, daß nur der als Blechstreifen ausgebildete Außenring 3 die für die Lagereigenschaften geforderten Materialqualitäten aufweisen muß, während der Gelenkkopf 4 beispielsweise aus Aluminium oder dergleichen hergestellt sein kann.

Aus Figur 3 ist schließlich ersichtlich, wie die Anlage an vier Kontaktstellen 15,16,17,18 erreicht wird. Der Wälzkörper 5 weist einen mittleren zylindrischen Abschnitt 11 auf, der einen Durchmesser D besitzt. Beidseitig des Zylinderabschnittes 11 geht der Wälzkörper 5 in Tragabschnitte 12 über. Diese besitzen eine speziell gestaltete Außenkontur 13, über welche die Anlage an den vier Kontaktstellen 15-18 erzielt wird.

Bevorzugt sind die Kontaktstellen 15-18 durch die Ausbildung der Außenkonturen 13 der Tragabschnitte 12 mit einer Schmiegung des Radius $R_W$ des Wälzkörpers S zum Radius $R_L$ der Innenringlaufbahn 7 und Außenringlaufbahn 8 zu erreichen. Zunächst sind bei einer vorgegebenen Größe für die Radien $R_L$ von Innenringlaufbahn 7 und Außenringlaufbahn 8 deren Mittelpunkte $O_1$ und $O_2$ auf der Mittelebene M, bei Außenring 3 und Innenring 2 festzulegen. Ausgehend von der Mittelebene M und den Mittelpunkten $O_1$ und $O_2$ sind die Kontaktstellen 15,16 jeweils ausgehend vom Mittelpunkt $O_2$ und deren Kontaktstellen 17,18 zur Außenringlaufbahn 8 ausgehend vom Mittelpunkt $O_1$ jeweils um den Winkel geneigt versetzt angeordnet. Dabei ist der Versatzwinkel $\alpha$ größer als der Selbsthemmungswinkel und liegt in der Größenordnung von $7°$. Darüberhinaus ist auch zu berücksichtigen, daß entsprechend dem Maß der möglichen Abwinklung von Außenring 3 und Innenring 2 einandergegenüber der Winkel $\alpha$ um den entsprechenden Kippwinkel $\beta$, beispielsweise $2°$, zu vergrößern ist. Zu den so im Schnittpunkt mit der Innenringlaufbahn 7 und Außenringlaufbahn 8 festgelegten Kontaktstellen 15-18 ist unter Berücksichtigung der zu wählenden Schmiegungsverhältnisse, welche die Tragfähigkeit des Lagers beeinflussen, die Größe des Radius für die Außenkontur 13 der beiden Tragab- schnitte 12 festzulegen. In der Regel wird von einem Schmiegungsbeiwert von 0,51 -0,75 ausgegangen. Dies be- deutet, daß der Radius $R_W$ der Außenkonturen 13 jeweils um etwa 2% kleiner zu bemessen ist, als der Radius $R_1$, der für Innenringlaufbahn 7 und Außenringlaufbahn 8 ange- setzt wurde. Der Mittelpunkt $O_3$ der beiden Außenkonturen 13 ist jeweils auf einem Strahl, ausgehend vom Mittelpunkt $O_1$ und durch die Kontaktstellen 17 und 18 verlaufend, mit einem entsprechenden Versatz ausgehend vom Mittelpunkt $O_1$ anzuordnen.

Die Endflächen 14 der beiden Tragabschnitte 12 des Wälzkörpers 5 haben keine besondere Bedeutung, da eine Führungsfunktion gegenüber Innenring 2 oder Außenring 3 nicht übernommen werden muß.

Durch gleichzeitige Bearbeitung der Außenfläche des Wälzkörpers 5 im Bereich der Außenkonturen 13 der Tragabschnitte 12 und des mittleren Abschnittes in Form des Zylinderabschnittes 11 mit einer Profilformschleifscheibe wird außerdem eine Meßbarkeit erreicht. Bei Wälzkörpern 5, bei denen der Durchmesser $D_K$ der Kontaktstellen 15-18 von wesentlicher Bedeutung ist, ist dies nicht möglich, da die Kontaktstellen auf einem schwer vorherbestimmbaren Bereich der Außenkonturen liegen. Die Anbringung des mittleren Zylinderabschnittes 11 bedeutet also die Nutzung einer Hilfsgröße zum Messen eines Durchmesser D, dem aufgrund Berechnung bestimmte Lagen und Durchmesser $D_K$ der Kontaktstellen 15-18 zugeordnet werden können. Auf diese Weise wird auch eine Zuordnung zu den richtigen Abstufungen der Laufbahnen von Innenring 2 und Außenring 3 ermöglicht, so daß sich die geforderten Spielverhältnisse ergeben.

Aus Figur 3 ist ebenfalls erkennbar, daß die beiden Tragabschnitte 12 Rotationskörper bezüglich der Wälzkörperachse 19 darstellen, bei denen die Außenkontur 13 um diese Achse 19 rotiert. ·

Bezugzeichenliste

1 Gelenklager
2 Innenring
3 Außenring
4 Außenringträger/Gelenkkopf
5 Wälzkörper
6 Käfig
7 Innenringlaufbahn
8 Außenringlaufbahn
9 Dichtung

10 Dichtungsanlagefläche
11 Zylinderabschnitt
12 Tragabschnitt
13 Außenkonturtragabschnitt
14 Endflächen
15,16 Kontaktstelle zur Innenringlaufbahn
17,18 Kontaktstelle zur Außenringlaufbahn
19 Wälzkörperachse
20 Rollkreis
$O_1$ Mittelpunkt der Außenringlaufbahn
$O_2$ Mittelpunkt der Innenringlaufbahn
$O_3$ Mittelpunkt der Außenkontur der Tragabschnitte
M Mittelebene
$R_1$ Radius der Außenringlaufbahn und der Innenringlaufbahn
$R_W$ Radius des Wälzkörpers
D Durchmesser des Zylinderabschnittes
$D_K$ Durchmesser im Bereich der Kontaktstellen
$\alpha$ Versatzwinkel
$\beta$ Kippwinkel
x-x Lagerdrehachse

## Ansprüche

1. Gelenklager, bei dem Innenring und Außenring einander gegenüber abwinkelbar sind und gegebenenfalls zusätzlich von einem Käfig geführte Wälzkörper an der Innenringlaufbahn und Außenringlaufbahn auf einer Kreisbahn abwälzend angeordnet sind, wobei Innenringlaufbahn und Außenringlaufbahn im Querschnitt jeweils als Kreisbogen ausgebildet sind, und der Mittelpunkt der Außenringlaufbahn auf der Lagerdrehachse angeordnet ist,
dadurch gekennzeichnet,
daß die Wälzkörper (5) einen mittleren Zylinderabschnitt (11) und beiseitig daran anschließend bezüglich der Wälzkörperachse (19) rotationssymmetrische Tragabschnitte (12) aufweisen, die an der Außenringlaufbahn (8) und an der Innenringlaufbahn (7) vier Kontaktstellen (15,16,17,18) bildend abgestützt sind, und daß die Kontaktstellen (15,16,17,18) bezogen auf die die Mittelpunkte $(O_1, O_2)$ von Innenringlaufbahn (7) und Außenringlaufbahn (8) enthaltende Mittelebene (M) mit einem Winkel ($\alpha$) versetzt angeordnet sind, der größer als der Selbsthemmungswinkel ist.

2. Gelenklager nach Anspruch 1,
dadurch gekennzeichnet,
daß die Tragabschnitte (12) eine einem Kreisbogen ($R_W$) entsprechende Außenkontur (13) aufweisen, wobei der Radius ($R_W$) kleiner ist als der ($R_L$) von Außenringlaufbahn (8) oder Innenringlaufbahn (7), und daß der Mittelpunkt ($O_3$) auf einem gedachten Strahl ausgehend vom Mittelpunkt ($O_1$) der Außenringlaufbahn (8) und geneigt um den Neigungswinkel ($\alpha$) der Kontaktstellen (15,16,17,18) zur Mittelebene (M) angeordnet ist.

3. Gelenklager nach Anspruch 1,
dadurch gekennzeichnet,
daß der Winkel ($\alpha$), um den die Kontaktstellen (15,16,17,18) zur Mittelebene (M) versetzt sind, jeweils mindestens um den maximalen Kippwinkel ($\beta$) größer ist als der Selbsthemmungswinkel.

4. Gelenklager nach Anspruch 2,
dadurch gekennzeichnet,
daß der Radius ($R_W$) der Außenkontur (13) der Tragabschnitte (12) der Wälzkörper (5) zum Radius ($R_L$) der Außenringlaufbahn (8) mit einer Schmiegungsgröße (S) nach der Beziehung

$$S = \frac{R_L}{2 \times R_W}$$

ausgelegt ist, worin S den Wert zwischen 0,51 und 0,75 annimmt.

5. Gelenklager nach Anspruch 1,
dadurch gekennzeichnet,
daß der Winkel ($\alpha$), um den die Kontaktstellen (15,16,17,18) zur Mittelebene (M) geneigt versetzt angeordnet sind, mindestens 7°, vermehrt um den maximalen Kippwinkel ($\beta$) ausgehend von der Mittellage, beträgt.

6. Gelenklager nach Anspruch 1,
dadurch gekennzeichnet,
daß die Außenkontur (13) der Wälzkörper (5) unter Verwendung von Profilformscheiben. auf Endmaß geschliffen ist.

Fig.1

Fig.2

EP 0 383 027 A1

EP 0 383 027 A1

Fig.3

## Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-C- 537 156 (OFFICINE DI VILLAR PEROSA) <br> * Insgesamt * | 1,2 | F 16 C 23/08 <br> F 16 C 33/36 |
| A | --- | 4 | |
| Y | US-A-3 365 253 (J. HALLER) <br> * Spalte 2, Zeilen 23-34; Figur 1 * | 1,2 | |
| A | GB-A- 27 334 (H.C. CLARK)(A.D. 1912) <br> ----- | | |
| | | | RECHERCHIERTE SACHGEBIETE (Int. Cl.5) |
| | | | F 16 C |

Der vorliegende Recherchenbericht wurde für alle Patentansprüche erstellt

| Recherchenort | Abschlußdatum der Recherche | Prüfer |
|---|---|---|
| DEN HAAG | 19-04-1990 | BEGUIN C.P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsatze
E : älteres Patentdokument, das jedoch erst am oder nach dem Anmeldedatum veröffentlicht worden ist
D : in der Anmeldung angeführtes Dokument
L : aus andern Grunden angeführtes Dokument
........................................................................
& : Mitglied der gleichen Patentfamilie, übereinstimmendes Dokument